# EUROPÄISCHE PATENTSCHRIFT

(11) **EP 3 140 159 B1**
(45) Veröffentlichungstag und Bekanntmachung des Hinweises auf die Patenterteilung: **19.05.2021**
(21) Anmeldenummer: 15711428.1
(22) Anmeldetag: 18.03.2015
(51) Int. Cl.: B60Q 1/08, B60Q 1/14

(54) **VERFAHREN ZUM BETREIBEN EINES FAHRERASSISTENZSYSTEMS EINES KRAFTFAHRZEUGS, FAHRERASSISTENZSYSTEM SOWIE KRAFTFAHRZEUG**
METHOD FOR OPERATING A DRIVER ASSISTANCE SYSTEM OF A MOTOR VEHICLE, DRIVER ASSISTANCE SYSTEM, AND MOTOR VEHICLE
PROCÉDÉ POUR FAIRE FONCTIONNER UN SYSTÈME D'AIDE À LA CONDUITE D'UN VÉHICULE À MOTEUR, SYSTÈME D'AIDE À LA CONDUITE ET VÉHICULE À MOTEUR

(30) Priorität: 06.05.2014 DE 102014006598
(43) Veröffentlichungstag der Anmeldung: 15.03.2017
(73) Patentinhaber: Audi AG, 85045 Ingolstadt (DE)
(72) Erfinder: ARMBRUSTER, Tilman, 85055 Ingolstadt (DE); FUNK, Christian, 92339 Beilngries (DE); OMERBEGOVIC, Said, 65933 Frankfurt (DE)
(74) Vertreter: Thielmann, Frank
(86) Internationale Anmeldenummer: PCT/EP2015/000593
(87) Internationale Veröffentlichungsnummer: WO 2015/169409

(56) Entgegenhaltungen:
- EP-A1- 2 266 836
- EP-A2- 2 067 660
- DE-A1- 10 355 757
- DE-A1-102006 022 022
- DE-A1-102009 054 249
- DE-A1-102012 001 017
- FR-A1- 2 983 278

## Beschreibung

Die vorliegende Erfindung betrifft ein Verfahren zum Betreiben eines Fahrerassistenzsystems eines Kraftfahrzeugs. Überdies betrifft die vorliegende Erfindung ein Fahrerassistenzsystem. Schließlich betrifft die vorliegende Erfindung ein Kraftfahrzeug.

Das Interesse richtet sich vorliegend insbesondere auf Fahrerassistenzsysteme, mit denen eine Kraftfahrzeugaußenbeleuchtung gesteuert werden kann. Derartige Fahrerassistenzsysteme sind bereits in dem Stand der Technik beschrieben. Beispielsweise sind sogenannte Fernlichtassistenten bekannt, welche das Fernlicht nach Aktivierung des Assistenzsystems automatisch in Abhängigkeit der Verkehrssituation ein- und ausschalten können. Auf diese Weise kann das Auf- und Abblenden des Fernlichts bei Dunkelheit automatisch erfolgen. Ein derartiges Fahrerassistenzsystem kann zumindest einen weiteren Verkehrsteilnehmer erkennen und das aktivierte Fernlicht wieder ausschalten. Sobald der weitere Verkehrsteilnehmer nicht mehr geblendet werden kann, wird das Fernlicht automatisch wieder eingeschaltet.

Ein derartiger Fernlichtassistent weist allerdings den Nachteil auf, dass dieser das Fernlicht lediglich ein- und ausschalten kann. Diesen digitalen Umschaltprozess kann der Fahrer als unangenehm empfinden. Insbesondere ist während der Adaption der Augen des Fahrers die Sicht eingeschränkt. Darüber hinaus kann insbesondere bei deaktiviertem Fernlicht keine optimale Ausleuchtung der Fahrbahn ermöglicht werden.

Des Weiteren sind aus dem Stand der Technik Fahrerassistenzsysteme bekannt, mit denen eine sogenannte gleitende Leuchtweitenregulierung bereitgestellt werden kann. Hierbei können beispielsweise mittels einer Videokamera vorausfahrende und entgegenkommende Fahrzeuge erkannt werden. Ein Steuergerät passt dann die vertikale Position der Hell-Dunkel-Grenze der Scheinwerfer automatisch an. Somit kann die Reichweite des mit den Scheinwerfern bereitgestellten Lichts automatisch an die Verkehrssituation angepasst werden. Mit den Scheinwerfern wird die Fahrbahn automatisch bis zum nächsten Verkehrsteilnehmer ausgeleuchtet. Zum Bereitstellen der gleitenden Leuchtweitenregulierung werden üblicherweise mechanische Aktoren in den Scheinwerfern benötigt.

Die DE 10 2008 060 949 A1 beschreibt ein Verfahren zur Ansteuerung von Fernlichtscheinwerfern, die jeweils eine einstellbare Lichtverteilung zur Umfeldausleuchtung des Fahrzeugs aufweisen. Hierbei werden Positionen von anderen Verkehrsteilnehmern ermittelt und die Lichtverteilung des jeweiligen Fernlichtscheinwerfers in Abhängigkeit von der Position angepasst. So können beispielsweise Verkehrsteilnehmer aus dem ausgeleuchteten Fernlichtbereich ausgespart werden oder eine Abblendlichtverteilung eingestellt werden.

Des Weiteren beschreibt die DE 10 2008 036 193 A1 eine Beleuchtungseinrichtung für ein Kraftfahrzeug. Dabei umfasst die Beleuchtungseinrichtung zumindest ein Lichtmodul, das mehrere Leuchtdioden umfasst, die insbesondere einzeln angesteuert werden können. Mit diesem Lichtmodul kann eine zusätzliche Lichtverteilung bereitgestellt werden, mit der beispielsweise zusammen mit einer Fernlichtgrundverteilung eine Fernlichtverteilung bereitgestellt wird.

Zudem ist aus der DE 10 2007 040 042 A1 ein System zum Erzeugen eines Lichtbündels im Vorfeld eines Kraftfahrzeugs bekannt. Hierbei wird ein Objekt im Vorfeld des Kraftfahrzeugs erfasst und anhand der Position des Objekts ein blendungskritischer Horizontalwinkelbereich ermittelt. Zudem werden einzelne LEDs unter Berücksichtigung der horizontalwinkelmäßigen Überlappung ihrer Beiträge zur Beleuchtungsstärke-Verteilung derart angesteuert, dass im blendungskritischen Horizontalwinkelbereich und bezogen auf die Position des detektierten Objekts ein Beleuchtungsstärkegrenzwert nicht überschritten wird.

Darüber hinaus beschreibt die DE 10 2012 001 017 A1 ein Verfahren zum Steuern eines Scheinwerfers eines Kraftfahrzeugs. Hierbei wird eine lichttechnische Größe des Scheinwerfers anhängig von einer Fahrzeugumgebungsbedingung automatisch bereichsweise verändert, insbesondere reduziert. Die lichttechnische Größe des Scheinwerfers kann beispielsweise der Lichtstrom sein. Die Fahrzeugumgebungsbedingung kann eine Position relativ zu einem Hindernis, insbesondere einem weiteren Kraftfahrzeug, umfassen.

Des Weiteren ist aus der EP 2 067 660 A2 ein Verfahren zum Verringern der Helligkeitsabgabe von einem Leuchtmittel bei einem Fahrzeug bekannt. Dabei wird der Abstand zu außerhalb des Fahrzeugs befindlichen Objekten mittels eines Sensors ermittelt. Ferner wird die Helligkeitsabgabe eines bereits aktivierten Leuchtmittels in Abhängigkeit von dem ermittelten Abstand verringert.

Die EP 2 266 836 A1 offenbart ein Scheinwerfersystem, welches mindestens einen Ultraschallsensor, mindestens einen Lichtsensor, mindestens einen Mikroprozessor, mindestens einen Stromtreiberschaltkreis und mindestens einen Scheinwerfer umfasst. Das Scheinwerfersystem wird zur automatischen Einstellung der Lichtintensität des Scheinwerfers in Abhängigkeit von dem Folgeabstand und dem von den Scheinwerfern der entgegenkommenden Fahrzeuge emittierten Licht verwendet.

Schließlich beschreibt die DE 103 55 757 A1 eine Scheinwerferanlage für ein Kraftfahrzeug. Die Scheinwerferanlage weist eine Scheinwerfersteuerung zur Einstellung des Scheinwerfers in Abhängigkeit eines Ausgangswertes eines Messgerätes zum Messen eines Abstandes zwischen dem Messgerät und einem Objekt, einer Geschwindigkeitsdifferenz zwischen dem Messgerät und dem Objekt oder eines Winkels zwischen einer Strahlrichtung des Messgerätes und dem Objekt auf.

Es ist Aufgabe der vorliegenden Erfindung, eine Lösung aufzuzeigen, wie ein Fahrerassistenzsystem der eingangs genannten Gattung eine Anpassung der Fernlichtverteilung einfacher erreicht werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Das erfindungsgemäße Verfahren zum Betreiben eines Fahrerassistenzsystems eines Kraftfahrzeugs umfasst das Aktivieren einer Leuchteinrichtung zumindest eines Scheinwerfers des Kraftfahrzeugs zum Bereitstellen eines Fernlichts, wobei beim Bereitstellen des Fernlichts ein vorbestimmter Lichtstrom mit der Leuchteinrichtung erzeugt wird, das Erfassen zumindest eines weiteren Verkehrsteilnehmers in einem Umfeld des Kraftfahrzeugs, das Ermitteln eines Abstands zwischen dem Kraftfahrzeug und dem zumindest einen weiteren erfassten Verkehrsteilnehmer sowie das Anpassen des mit der Leuchteinrichtung beim Bereitstellen des Fernlichts erzeugten vorbestimmten Lichtstroms in Abhängigkeit von dem ermittelten Abstand, wobei der mit der Leuchteinrichtung erzeugte Lichtstrom derart angepasst wird, dass eine mit der Leuchteinrichtung in einem Bereich des zumindest einen weiteren Verkehrsteilnehmers erzeugte Beleuchtungsstärke einen vorbestimmten Wert aufweist, wobei der Bereich einer dem Kraftfahrzeug zugewandten Außenfläche des zumindest einen weiteren Verkehrsteilnehmers zugeordnet ist.

Der Erfindung liegt die Erkenntnis zugrunde, dass die Reichweite des Fernlichts auf einfache Weise durch die Anpassung des Lichtstroms, der mit einer Leuchteinrichtung zumindest eines Scheinwerfers bereitgestellt wird, verändert werden kann. Das Fahrerassistenzsystem kann automatisch beim Beginn der Fahrt aktiviert werden oder durch eine Bedieneingabe des Fahrers aktiviert werden. Zum Bereitstellen eines Fernlichts wird die Leuchteinrichtung der Scheinwerfer aktiviert, die zum Bereitstellen des Fernlichts vorgesehen sind. Mit den Leuchteinrichtungen der Scheinwerfer wird jeweils ein vorbestimmter Lichtstrom beim Bereitstellen des Fernlichts bereitgestellt. Das Umfeld des Kraftfahrzeugs wird auf das Vorhandensein zumindest eines weiteren Verkehrsteilnehmers hin überprüft. Falls ein weiterer Verkehrsteilnehmer im Umfeld beziehungsweise im Umgebungsbereich des Kraftfahrzeugs erfasst wird, wird der Abstand zwischen dem Kraftfahrzeug und dem weiteren Verkehrsteilnehmer ermittelt. In Abhängigkeit von dem Abstand wird der Lichtstrom der Leuchteinrichtung angepasst. Es wird also weiterhin mit dem zumindest einen Scheinwerfer eine Fernlichtverteilung bereitgestellt, deren Reichweite angepasst werden kann. Somit erfolgt kein Umschalten zwischen Fernlicht und Abblendlicht, wie es beispielsweise von Fernlichtassistenten bekannt ist. Zudem kann die Reichweite des Fernlichts ohne zusätzliche mechanische Aktoren angepasst werden.

Zudem wird der mit der Leuchteinrichtung erzeugte Lichtstrom derart angepasst, dass eine mit der Leuchteinrichtung in einem Bereich des zumindest einen weiteren Verkehrsteilnehmers erzeugte Beleuchtungsstärke einen vorbestimmten Wert aufweist. Mit anderen Worten kann der Lichtstrom, der mit der Leuchteinrichtung des jeweiligen Scheinwerfers bereitgestellt wird, so angepasst werden, dass die Beleuchtungsstärke, die der zumindest eine weitere Verkehrsteilnehmer wahrnimmt, immer gleich bleibt. Somit kann zuverlässig verhindert werden, dass der zumindest eine weitere Verkehrsteilnehmer durch das Fernlicht des Kraftfahrzeugs gestört wird.

Des Weiteren wird zum Anpassen des Lichtstroms der Leuchteinrichtung eine elektrische Stromstärke und/oder eine elektrische Spannung, mit der die Leuchteinrichtung versorgt wird, angepasst. Insbesondere wird die elektrische Stromstärke und/oder die elektrische Spannung, mit der die Leuchteinrichtung versorgt wird, reduziert. Auf diese Weise kann der mit der Leuchteinrichtung bereitgestellte Lichtstrom einfach angepasst werden. Insbesondere kann die Leuchteinrichtung mit einem pulsweitenmodulierten elektrischen Strom und/oder mit einer pulsweitenmodulierten elektrischen Spannung betrieben werden. In diesem Fall kann der Tastgrad der pulsweitenmodulierten elektrischen Stromstärke und/oder der pulsweitenmodulierten elektrischen Spannung in Abhängigkeit von dem ermittelten Abstand einfach angepasst werden.

Zudem weist die Leuchteinrichtung eine Mehrzahl von Leuchtmitteln auf, wobei zum Anpassen des von der Leuchteinrichtung bereitgestellten Lichtstroms der jeweilige Lichtstrom jeder der Leuchtmittel angepasst wird. Die Leuchtmittel können beispielsweise als Leuchtdioden ausgebildet sein. Insbesondere wird zum Anpassen des Lichtstroms der Leuchteinrichtung mit jeder der Leuchtdioden der gleiche Lichtstrom bereitgestellt. Dabei können die jeweiligen Leuchtmittel jeweils mit der gleichen (pulsweitenmodulierten) elektrischen Spannung und/oder mit dem gleichen (pulsweitenmodulierten) elektrischen Strom betrieben werden. Somit können alle Leuchtmittel gleichermaßen gedimmt werden. Durch die geometrische Anordnung der Leuchtmittel innerhalb der Leuchteinrichtung kann eine vorbestimmte Fernlichtverteilung vor dem Kraftfahrzeug bereitgestellt werden. Somit wird der Aufwand bei der Ansteuerung der einzelnen Leuchtmittel deutlich reduziert.

Außerdem werden zumindest zwei weitere Verkehrsteilnehmer im Umfeld des Kraftfahrzeugs erfasst, der jeweilige Abstand zu den zumindest zwei weiteren Verkehrsteilnehmern wird ermittelt und der mit der Leuchteinrichtung erzeugte Lichtstrom wird in Abhängigkeit von dem geringeren der jeweiligen ermittelten Abstände angepasst. Mit anderen Worten können auch mehrere weitere Verkehrsteilnehmer im Umfeld des Kraftfahrzeugs erfasst werden. Zu jedem dieser Verkehrsteilnehmer wird der Abstand ermittelt. Anschließend wird der geringste von den Abständen ermittelt. In Abhängigkeit von diesem geringsten Abstand wird dann der Lichtstrom der Leuchteinrichtung angepasst. Somit kann ein Blenden der Verkehrsteilnehmer durch das Fernlicht zuverlässig verhindert werden.

Bevorzugt wird der mit der Leuchteinrichtung beim Bereitstellen des Fernlichts erzeugte Lichtstrom in Abhängigkeit von dem ermittelten Abstand reduziert. Durch das Reduzieren des Lichtstroms, der mit der Leuchteinrichtung beim Bereitstellen der Fernlichtverteilung bereitgestellt wird, kann die Reichweite des Fernlichts reduziert werden. Auf diese Weise kann zuverlässig verhindert werden, dass ein weiterer Verkehrsteilnehmer im Umgebungsbereich des Kraftfahrzeugs geblendet wird.

Bevorzugt wird der Abstand zwischen dem Kraftfahrzeug und dem zumindest einen weiteren Verkehrsteilnehmer kontinuierlich ermittelt, und der mit der Leuchteinrichtung erzeugte Lichtstrom wird kontinuierlich in Abhängigkeit von dem ermittelten Abstand angepasst. Somit kann die Reichweite des Fernlichts während der Fahrt des Kraftfahrzeugs kontinuierlich an die Position der Verkehrsteilnehmer im Umfeld des Kraftfahrzeugs angepasst werden. Auf diese Weise kann verhindert werden, dass die weiteren Verkehrsteilnehmer durch das Fernlicht negativ beeinflusst werden. Zudem kann dem Fahrer die maximal mögliche Ausleuchtung durch das Fernlicht bereitgestellt werden. Auf diese Weise kann die Sicherheit im Straßenverkehr erhöht werden.

In einer Ausgestaltung wird der Abstand zwischen dem Kraftfahrzeug und dem zumindest einen weiteren Verkehrsteilnehmer mit einem Umfeldsensor ermittelt. Zu diesem Zweck kann beispielsweise ein Radarsensor, ein Lidar-Sensor und/oder ein Ultraschallsensor verwendet werden. Darüber hinaus ist es auch denkbar, dass eine Videokamera verwendet wird, die eine Bildfolge des Umgebungsbereichs des Kraftfahrzeugs aufzeichnet und mit einer entsprechenden Bildverarbeitungssoftware den Abstand zu dem weiteren Verkehrsteilnehmer ermitteln kann. Auf diese Weise kann der Abstand zu dem weiteren Verkehrsteilnehmer mit Systemen ermittelt werden, die üblicherweise in modernen Kraftfahrzeugen verbaut sind.

Alternativ oder zusätzlich kann der Abstand zwischen dem Kraftfahrzeug und dem zumindest einen weiteren Verkehrsteilnehmer anhand von Positionsdaten des zumindest einen weiteren Verkehrsteilnehmers, die von dem zumindest einen weiteren Verkehrsteilnehmer zu dem Kraftfahrzeug übermittelt werden, ermittelt. Die Positionsdaten des zumindest einen weiteren Verkehrsteilnehmers können beispielsweise anhand eines satellitengestützten Positionsbestimmungssystems des Verkehrsteilnehmers ermittelt werden und mittels Fahrzeug-zu-Fahrzeug-Kommunikation (car-to-car) an das Kraftfahrzeug übermittelt werden. Diese Positionsdaten können mit den Positionsdaten des Kraftfahrzeugs, die beispielsweise mit einem satellitengestützten Positionsbestimmungssystem des Kraftfahrzeugs ermittelt werden, verglichen werden. Anhand des Vergleichs kann auf einfache Weise der Abstand zwischen dem Kraftfahrzeug und dem weiteren Verkehrsteilnehmer ermittelt werden.

Das erfindungsgemäße Fahrerassistenzsystem umfasst eine Steuereinrichtung, welche zum Durchführen des erfindungsgemäßen Verfahrens ausgebildet ist. Die Steuereinrichtung kann beispielsweise ein Steuergerät des Kraftfahrzeugs sein. Zudem kann das Fahrerassistenzsystem zumindest einen Scheinwerfer, insbesondere zwei Scheinwerfer des Kraftfahrzeugs umfassen. Die Scheinwerfer umfassen eine Leuchteinrichtung, mit der ein Fernlicht bereitgestellt werden kann. Die jeweilige Leuchteinrichtung kann bevorzugt eine Mehrzahl von Leuchtdioden (LEDs) umfassen.

Das erfindungsgemäße Kraftfahrzeug umfasst das erfindungsgemäße Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug, welches ein Fahrerassistenzsystem aufweist;
- Fig. 2: in schematischer Darstellung das Kraftfahrzeug und ein entgegenkommendes Fahrzeug sowie die Anpassung des Fernlichts des Kraftfahrzeugs in Abhängigkeit von dem entgegenkommenden Fahrzeug; und
- Fig. 3: das Kraftfahrzeug und ein vorausfahrendes Fahrzeug sowie die Anpassung des Fernlichts des Kraftfahrzeugs an das vorausfahrende Fahrzeug.

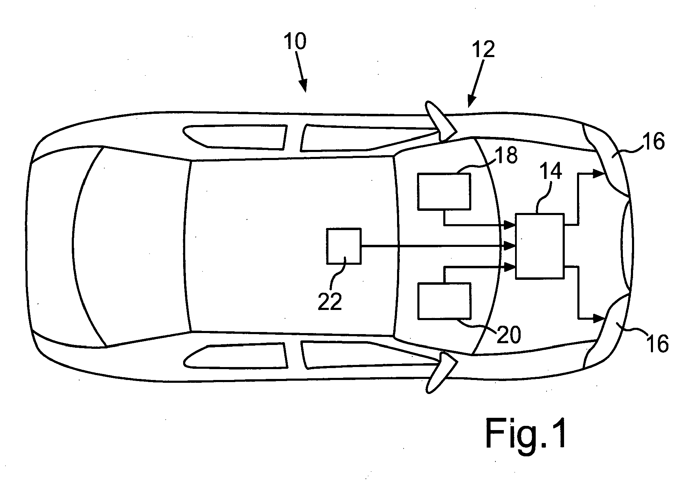

Fig. 1 zeigt eine schematische Darstellung eines Kraftfahrzeugs 10 in einer Draufsicht. Das Kraftfahrzeug 10 ist vorliegend als Personenkraftwagen ausgebildet. Das Kraftfahrzeug 10 umfasst ein Fahrerassistenzsystem 12. Das Fahrerassistenzsystem 12 umfasst wiederum eine Steuereinrichtung 14. Mittels der Steuereinrichtung 14 können die Scheinwerfer 16 des Kraftfahrzeugs 10 angesteuert werden. Insbesondere kann mit der Steuereinrichtung 14 eine jeweilige, hier nicht dargestellte Leuchteinrichtung der jeweiligen Scheinwerfer 16 angesteuert werden. Die Leuchteinrichtung umfasst insbesondere eine Mehrzahl von Leuchtdioden (LEDs), die gemeinsam oder einzeln mit der Steuereinrichtung 14 angesteuert werden können.

Darüber hinaus umfasst das Fahrerassistenzsystem 12 einen Umfeldsensor 18. In dem Ausführungsbeispiel von Fig. 1 ist nur ein Umfeldsensor 18 dargestellt. Es kann selbstverständlich vorgesehen sein, dass das Kraftfahrzeug 10 mehrere Umfeldsensoren 18 umfasst. Derartige Umfeldsensoren 18 können beispielsweise einen Radarsensor, einen Lidar-Sensor und/oder einen Ultraschallsensor umfassen. Mit dem Umfeldsensor 18 kann insbesondere ein Signal ausgesendet werden und ein von einem Objekt reflektiertes Signal empfangen werden. Anhand der Laufzeit kann der Abstand zwischen dem Kraftfahrzeug 10 und dem Objekt bestimmt werden. Der Umfeldsensor 18 kann auch eine Videokamera umfassen, mit der eine Bildfolge eines Umgebungsbereichs des Kraftfahrzeugs 10 aufgenommen wird. Anhand einer entsprechenden Bildverarbeitungssoftware kann ein Objekt im Umfeld des Kraftfahrzeugs 10 erfasst werden. Ebenso kann der Abstand zwischen dem Kraftfahrzeug 10 und dem Objekt anhand der Videodaten ermittelt werden.

Des Weiteren umfasst das Fahrerassistenzsystem 12 eine Empfangseinrichtung 20, mit der Daten über eine Fahrzeug-zu-Fahrzeug-Kommunikation und/oder über eine Fahrzeug-zu-Infrastruktur-Kommunikation übertragen werden können. Beispielsweise können über die Empfangseinrichtung 20 Positionsdaten eines anderen Verkehrsteilnehmers empfangen werden. Diese Positionsdaten können von dem anderen Verkehrsteilnehmer beispielsweise mittels eines satellitengestützten Positionsbestimmungssystems ermittelt werden. Schließlich umfasst das Fahrerassistenzsystem 12 ein GPS-Modul 22, mit dem die aktuelle Position des Kraftfahrzeugs 12 mit Hilfe des satellitengestützten Positionsbestimmungssystems ermittelt werden kann. Diese ermittelten Positionsdaten des Kraftfahrzeugs 10 können mit den Positionsdaten eines anderen Verkehrsteilnehmers, die mit der Empfangseinrichtung 20 empfangen werden, verglichen werden. Anhand des Vergleichs kann ein Abstand zwischen dem Kraftfahrzeug 10 und dem weiteren Verkehrsteilnehmer ermittelt werden.

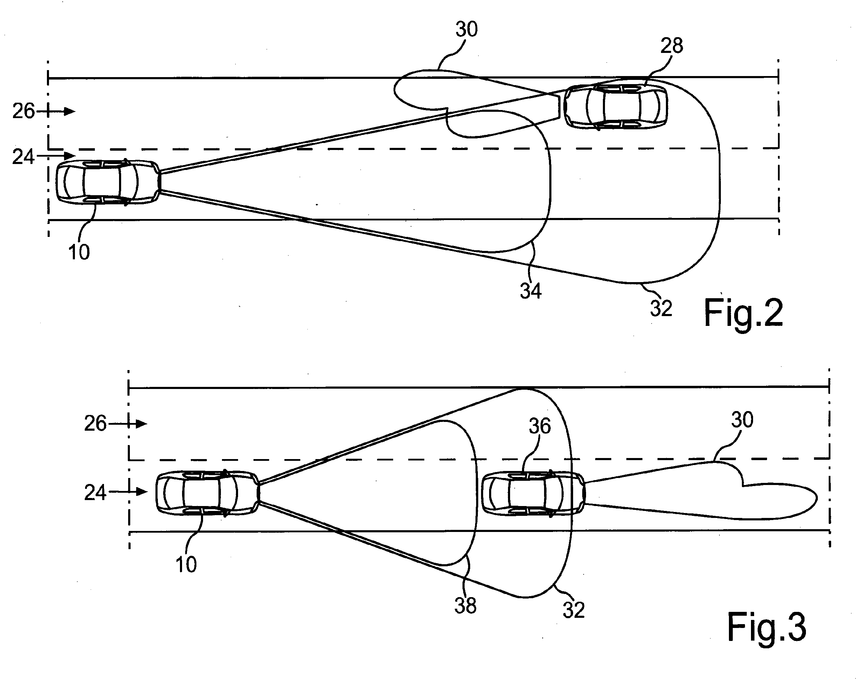

Die Steuereinrichtung 14 ist dazu ausgebildet, die Scheinwerfer 16 beziehungsweise die jeweiligen Leuchteinrichtungen der Scheinwerfer 16 in Abhängigkeit von dem ermittelten Abstand zwischen dem Kraftfahrzeug 10 und dem weiteren Verkehrsteilnehmer 28, 36 anzupassen. Dies ist im Zusammenhang mit den Fig. 2 und 3 verdeutlich.

Gemäß dem Ausführungsbeispiel von Fig. 2 befindet sich das Kraftfahrzeug 10 auf einer ersten Fahrbahn 24. Auf einer zweiten Fahrbahn 26 befindet sich ein weiterer Verkehrsteilnehmer 28 in Form eines entgegenkommenden Fahrzeugs. Bei dem entgegenkommenden Fahrzeug ist vorliegend das Abblendlicht aktiviert. Die Abblendlichtverteilung 30 des entgegenkommenden Fahrzeugs ist schematisch dargestellt. Bei dem Kraftfahrzeug 10 ist das Fernlicht aktiviert. Zudem ist das Fahrerassistenzsystem 12 aktiviert, mit dem das Fernlicht, das mit den Scheinwerfern 16 bereitgestellt wird, angepasst werden kann.

In Fig. 2 eine erste Fernlichtverteilung 32 schematisch dargestellt. Diese erste Fernlichtverteilung 32 entspricht einer Voreinstellung bzw. einer Standardeinstellung. Hierbei werden die jeweiligen Leuchteinrichtungen der Scheinwerfer 16 ein vorbestimmter, erster Lichtstrom bereitgestellt. Hierzu werden die jeweiligen Leuchteinrichtungen mit einer ersten elektrischen Spannung und/oder mit einer ersten elektrischen Strom betrieben. Diese erste Fernlichtverteilung 32 wird beibehalten, falls keine weiteren Verkehrsteilnehmer im Umfeld des Kraftfahrzeugs erfasst werden.

Vorliegend wird der Abstand zwischen dem Kraftfahrzeug 10 und dem weiteren Verkehrsteilnehmer 28 bzw. dem entgegenkommenden Fahrzeug kontinuierlich gemessen. In Abhängigkeit von dem ermittelten Abstand wird die Fernlichtverteilung 32 kontinuierlich angepasst. In der Momentaufnahme von Fig. 2 ist beispielhaft eine angepasste, zweite Fernlichtverteilung 34 dargestellt. Diese unterscheidet sich von der ersten Fernlichtverteilung 32 dadurch, dass die jeweiligen Leuchteinrichtungen einen im Vergleich zum ersten Lichtstrom geringeren, zweiten Lichtstrom bereitstellen. Zu diesem Zweck können die jeweiligen Leuchteinrichtung mit einer im Vergleich zu ersten elektrischen Spannung reduzierten, zweiten elektrischen Spannung und/oder mit einer im Vergleich zur ersten elektrischen reduzierten, zweiten elektrischen Stromstärke betrieben werden.

Zur Verdeutlichung des Verfahrens gemäß einer Ausführungsform der Erfindung ist die zweite Fernlichtverteilung 34 in Fig. 2 so dargestellt, dass diese unmittelbar vor dem weiteren Verkehrsteilnehmer 28 endet. Der zweite Lichtstrom, der mit den Leuchteinrichtungen zu diesem Zeitpunkt bereitgestellt wird, wird insbesondere so angepasst, dass eine Beleuchtungsstärke in einem dem weiteren Verkehrsteilnehmer 28 zugeordneten Bereich einen vorbestimmten Wert aufweist. Dieser Bereich kann beispielsweise einer dem Kraftfahrzeug 10 zugewandten Außenfläche des weiteren Verkehrsteilnehmers 28 zugeordnet sein. Mit anderen Worten wird der Lichtstrom der Leuchteinrichtungen in Abhängigkeit von dem erfassten Abstand zwischen dem Kraftfahrzeug 10 und dem weiteren Verkehrsteilnehmer 28 kontinuierlich so angepasst, dass sich in dem Bereich des weiteren Verkehrsteilnehmers 28 immer die gleiche Beleuchtungsstärke einstellt.

Fig. 3 zeigt ein weiteres Ausführungsbeispiel, bei dem der weitere Verkehrsteilnehmer 36 im Umfeld des Kraftfahrzeugs 10 ein vorausfahrendes Fahrzeug ist. Das Kraftfahrzeug 10 und das vorausfahrende Fahrzeug befinden sich also auf der gleichen Fahrspur 24. Auch hier wird anhand des ermittelten Abstands zwischen dem Kraftfahrzeug 10 und dem weiteren Verkehrsteilnehmer 36 bzw. dem vorausfahrenden Fahrzeug die Fernlichtverteilung ausgehend von der ersten Fernlichtverteilung 32 kontinuierlich angepasst. In der Momentaufnahme von Fig. 3 ist beispielhaft eine weitere Fernlichtverteilung 38 gezeigt, die direkt hinter dem Verkehrsteilnehmer 36 endet. Auch in diesem Fall wird der Lichtstrom der Leuchteinrichtungen ausgehend von dem ersten Lichtstrom kontinuierlich angepasst. Beispielsweise kann der Lichtstrom so angepasst werden, dass sich in einem Heckbereich des vorausfahrenden Fahrzeugs immer die gleiche Beleuchtungsstärke bereitgestellt wird.

Mit dem Fahrerassistenzsystem 12 kann auf einfach und kostengünstige Weise eine Anpassung des Fernlichts nach Art einer gleitenden Leuchtweitenregulierung ermöglicht werden. Insbesondere wenn die jeweiligen Leuchteinrichtungen der Scheinwerfer 16 mehrere Leuchtdioden aufweisen, die beispielsweise matrixartig angeordnet sind, kann der jeweilige Lichtstrom der Leuchtdioden durch Anpassung der pulsweitenmodulierten Spannung bzw. des pulsweitenmodulierten Stroms angepasst werden. Beispielsweise können die Leuchtdioden so angesteuert werden, dass alle Leuchtdioden die den gleichen Lichtstrom bereitstellen. Zudem können die Leuchteinrichtungen so mit der Steuereinrichtung 14 angesteuert werden, dass mit allen Leuchtdioden in beiden Scheinwerfern 16 jeweils der gleiche Lichtstrom bereitgestellt wird. Somit kann der Lichtstrom schnell und mit geringem Steuerungsaufwand angepasst werden. Durch die kontinuierliche Erfassung des Abstands kann der Lichtstrom quasi in Echtzeit angepasst werden.

## Patentansprüche

1. Verfahren zum Betreiben eines Fahrerassistenzsystems (12) eines Kraftfahrzeugs (10) mit den Schritten:
- Aktivieren einer Leuchteinrichtung zumindest eines Scheinwerfers (16) des Kraftfahrzeugs (10) zum Bereitstellen eines Fernlichts, wobei
- beim Bereitstellen des Fernlichts ein vorbestimmter Lichtstroms mit der Leuchteinrichtung erzeugt wird,
- Erfassen zumindest eines weiteren Verkehrsteilnehmers (28, 36) in einem Umfeld des Kraftfahrzeugs (10),
- Ermitteln eines Abstands zwischen dem Kraftfahrzeug (10) und zumindest einem weiteren erfassten Verkehrsteilnehmer (28, 36) und
- Anpassen des mit der Leuchteinrichtung beim Breitstellen des Fernlichts erzeugten, vorbestimmten Lichtstroms in Abhängigkeit von dem ermittelten Abstand, wobei
- der mit der Leuchteinrichtung erzeugte Lichtstrom derart angepasst wird, dass eine mit der Leuchteinrichtung in einem Bereich des zumindest einen weiteren Verkehrsteilnehmers (28, 36) erzeugte Beleuchtungsstärke einen vorbestimmten Wert aufweist, wobei der Bereich einer dem Kraftfahrzeug (10) zugewandten Außenfläche des zumindest einen weiteren Verkehrsteilnehmers (28, 36) zugeordnet ist,
- zum Anpassen des Lichtstroms der Leuchteinrichtung eine elektrische Stromstärke und/oder eine elektrische Spannung, mit der die Leuchteinrichtung versorgt wird, angepasst wird,
- zumindest zwei weitere Verkehrsteilnehmer (28, 36) im Umfeld des Kraftfahrzeugs (10) erfasst werden, der jeweilige Abstand zu den zumindest zwei weitere Verkehrsteilnehmer (28, 36) ermittelt wird und der mit der Leuchteinrichtung erzeugte Lichtstrom in Abhängigkeit von dem geringeren der jeweiligen ermittelten Abstände angepasst wird, **dadurch gekennzeichnet, dass**
- die Leuchteinrichtung eine Mehrzahl von Leuchtmitteln aufweist, wobei zum Anpassen des von der Leuchteinrichtung bereitgestellten Lichtstroms der jeweilige Lichtstrom jeder der Leuchtmittel angepasst wird und mit jedem der Leuchtmittel der gleiche Lichtstrom bereitgestellt wird.

2. Verfahren nach Anspruch 1,
**dadurch gekennzeichnet, dass**
der mit der Leuchteinrichtung beim Breitstellen des Fernlichts erzeugte Lichtstroms in Abhängigkeit von dem ermittelten Abstand reduziert wird.

3. Verfahren nach Anspruch 1 oder 2,
**dadurch gekennzeichnet, dass**
der Abstand zwischen den Kraftfahrzeug (10) und dem zumindest einen weiteren Verkehrsteilnehmer (28, 36) kontinuierlich ermittelt wird und der mit der Leuchteinrichtung erzeugte Lichtstrom kontinuierlich in Abhängigkeit von dem ermittelten Abstand angepasst wird.

4. Verfahren nach einem der vorhergehenden Ansprüche,
**dadurch gekennzeichnet, dass**
der Abstand zwischen dem Kraftfahrzeug (10) und dem zumindest einen weiteren Verkehrsteilnehmer (28, 36) mit einem Umfeldsensor ermittelt wird.

5. Verfahren nach einem der vorhergehenden Ansprüche,
**dadurch gekennzeichnet, dass**
der Abstand zwischen dem Kraftfahrzeug (10) und dem zumindest einen weiteren Verkehrsteilnehmer (28, 36) anhand von Positionsdaten des zumindest einen weiteren Verkehrsteilnehmers (28, 36), die von dem zumindest einen weiteren Verkehrsteilnehmer (28, 36) zu dem Kraftfahrzeug (10) übermittelt werden, ermittelt wird.

6. Fahrerassistenzsystem (12) mit einer Steuereinrichtung (14), welche zum Durchführen eines Verfahrens nach einem der vorhergehenden Ansprüche ausgebildet ist.

7. Kraftfahrzeug (10) mit einem Fahrerassistenzsystem (12) nach Anspruch 6.

## Claims

1. Method for operating a driver assistance system (12) of a motor vehicle (10), having the steps of:
- activating a lighting apparatus of at least one headlight (16) of the motor vehicle (10) in order to provide a high beam, wherein
- a predetermined luminous flux is generated by the lighting apparatus when the high beam is provided,
- detecting at least one further road user (28, 36) in a vicinity of the motor vehicle (10),
- ascertaining a distance between the motor vehicle (10) and at least one further detected road user (28, 36), and
- adapting the predetermined luminous flux which is generated by the lighting apparatus when the high beam is provided depending on the ascertained distance, wherein
- the luminous flux generated by the lighting apparatus is adapted in such a way that an illuminance generated by the lighting apparatus in a region of the at least one further road user (28, 36) has a predetermined value, wherein the region is associated with an outer surface of the at least one further road user (28, 36) facing the motor vehicle (10),
- in order to adapt the luminous flux of the lighting apparatus, an electric current intensity and/or an electric voltage with which the lighting apparatus is supplied is adapted,
- at least two further road users (28, 36) in the vicinity of the motor vehicle (10) are detected, the respective distance to the at least two further road users (28, 36) is ascertained, and the luminous flux generated by the lighting apparatus is adapted depending on the lesser of the respective ascertained distances,
**characterised in that**
- the lighting apparatus has a plurality of lighting means, wherein in order to adapt the luminous flux provided by the lighting apparatus, the respective luminous flux of each of the lighting means is adapted and the same luminous flux is provided by each of the lighting means.

2. Method according to claim 1,
**characterised in that**
the luminous flux generated by the lighting apparatus when the high beam is provided is reduced depending on the ascertained distance.

3. Method according to claim 1 or 2,
**characterised in that**
the distance between the motor vehicle (10) and the at least one further road user (28, 36) is continuously ascertained, and the luminous flux generated by the lighting apparatus is continuously adapted depending on the ascertained distance.

4. Method according to any of the preceding claims,
**characterised in that**
the distance between the motor vehicle (10) and the at least one further road user (28, 36) is determined by a vicinity sensor.

5. Method according to any of the preceding claims,
**characterised in that**
the distance between the motor vehicle (10) and the at least one further road user (28, 36) is ascertained on the basis of position data of the at least one further road user (28, 36) which are transmitted from the at least one further road user (28, 36) to the motor vehicle (10).

6. Driver assistance system (12) having a control apparatus (14) which is designed to carry out a method according to any of the preceding claims.

7. Motor vehicle (10) having a driver assistance system (12) according to claim 6.

## Revendications

1. Procédé de fonctionnement d'un système d'assistance au conducteur (12) d'un véhicule automobile (10) avec les étapes :
- l'activation d'un dispositif d'éclairage au moins d'un phare (16) du véhicule automobile (10) pour la fourniture d'un feu de route, dans lequel
- lors de la fourniture du feu de route un flux de lumière prédéterminé est généré avec le dispositif d'éclairage,
- la détection d'au moins un autre usager du trafic (28, 36) dans un environnement du véhicule automobile (10),
- la détermination d'une distance entre le véhicule automobile (10) et au moins un autre usager du trafic (28, 36) détecté et
- l'adaptation du flux de lumière prédéterminé, généré avec le dispositif d'éclairage lors de la fourniture du feu de route en fonction de la distance déterminée, dans lequel
- le flux de lumière généré avec le dispositif d'éclairage est adapté de telle manière qu'une intensité d'éclairage générée avec le dispositif d'éclairage dans une zone d'au moins un autre usager du trafic (28, 36) présente une valeur prédéterminée, dans lequel la zone est associée à une surface extérieure tournée vers le véhicule automobile (10) d'au moins un autre usager du trafic (28, 36),
- pour l'adaptation du flux de lumière du dispositif d'éclairage une intensité de courant électrique et/ou une tension électrique, en laquelle le dispositif d'éclairage est alimenté, est adaptée,
- au moins deux autres usagers du trafic (28, 36) sont détectés dans l'environnement du véhicule automobile (10), la distance respective par rapport aux au moins deux autres usagers du trafic (28, 36) est déterminée et le flux de lumière généré avec le dispositif d'éclairage est adapté en fonction de la plus faible des distances déterminées respectives,
**caractérisé en ce que**
- le dispositif d'éclairage présente une pluralité de moyens d'éclairage, dans lequel pour l'adaptation du flux de lumière fourni par le dispositif d'éclairage le flux de lumière respectif de chacun des moyens d'éclairage est adapté et le même flux de lumière est fourni avec chacun des moyens d'éclairage.

2. Procédé selon la revendication 1,
**caractérisé en ce que**
le flux de lumière généré avec le dispositif d'éclairage lors de la fourniture du feu de route est réduit en fonction de la distance déterminée.

3. Procédé selon la revendication 1 ou 2,
**caractérisé en ce que**
la distance entre le véhicule automobile (10) et l'au moins un autre usager du trafic (28, 36) est déterminée en continu et le flux de lumière généré avec le dispositif d'éclairage est adapté en continu en fonction de la distance déterminée.

4. Procédé selon l'une des revendications précédentes,
**caractérisé en ce que**
la distance entre le véhicule automobile (10) et l'au moins un autre usager du trafic (28, 36) est déterminée avec un capteur environnemental.

5. Procédé selon l'une des revendications précédentes,
**caractérisé en ce que**
la distance entre le véhicule automobile (10) et l'au moins un autre usager du trafic (28, 36) est déterminée au moyen de données de position d'au moins un autre usager du trafic (28, 36) qui sont transmises par l'au moins un autre usager du trafic (28, 36) au véhicule automobile (10).

6. Système d'assistance au conducteur (12) avec un dispositif de commande (14) qui est réalisé pour la réalisation d'un procédé selon l'une des revendications précédentes.

7. Véhicule automobile (10) avec un système d'assistance au conducteur (12) selon la revendication 6.
